# EUROPÄISCHE PATENTANMELDUNG

(11) **EP 2 060 369 A1**
(43) Veröffentlichungstag der Anmeldung: **20.05.2009**
(21) Anmeldenummer: 08168904.4
(22) Anmeldetag: 12.11.2008
(51) Int. Cl.: B25J 19/00

(54) **Vorrichtung zum Führen eines Leitungspakets**

(30) Priorität: 13.11.2007 DE 102007054501
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft eine Vorrichtung (10) zum Führen eines Leitungspakets an einer Maschine, insbesondere zur Montage an einem Roboter, mit einem rohrförmigen Befestigungselement (12), das Befestigungsmittel (32) zum Befestigen an einem Maschinenteil (34) aufweist, und mit einer im Befestigungselement (12) lösbar fixierten Führungshülse (36), in der das Leitungspaket in Längsrichtung verschiebbar und voll umfänglich umschlossen aufnehmbar ist, dadurch gekennzeichnet, dass die Führungshülse (36) mindestens zwei voneinander trennbare Hülsenteile (42) zum jeweils teilweisen Umschließen des Leitungspakets aufweist.

## Beschreibung

Die Erfindung betrifft eine Vorrichtung zum Führen eines Leitungspakets an einer Maschine gemäß Oberbegriff des Anspruchs 1 bzw. gemäß Oberbegriff des Anspruchs 8.

Bekannte Vorrichtungen dieser Art dienen der Befestigung eines Leitungspakets an einem Roboterarm. Das Leitungspaket ist in der Regel in einem Wellschlauch aufgenommen, der nahe seinem ersten Ende einen Protektor aufweist und mit dem zweiten Ende an einem Bearbeitungswerkzeug fixiert ist. Zwischen den beiden Enden ist ein Befestigungselement angeordnet, mit dem der Wellschlauch am Roboterarm befestigt ist. Dieses ist rohrförmig als sogenannte Trompetenhalterung ausgebildet und besteht aus zwei Halbschalen, die mittels eines Scharniers zum Öffnen und Schließen gegeneinander verschwenkt werden können. Im Befestigungselement ist eine Führungshülse bzw. Gleithülse aufgenommen, auf die eine Schraubenfeder aufgesteckt ist. Die Führungshülse ist im geschlossenen Befestigungselement unverschiebbar fixiert. Der Wellschlauch wird durch die Schraubenfeder und die Führungshülse durchgesteckt und ist verschiebbar in der Führungshülse aufgenommen. Jenseits des Protektors ist eine Längenreserve des Wellschlauchs bzw. des Schlauchpakets in Form einer Schlaufe vorhanden. Wird das Bearbeitungswerkzeug bewegt, so kann der Wellschlauch durch die Führungshülse unter Verkürzung der Längenreserve gegen die Rückstellkraft der Schraubenfeder durchgezogen werden.

Die Führungshülse unterliegt dabei einem hohen Verschleiß. Ist sie abgenutzt, so muß sie von der Schraubenfeder gelöst und über den Wellschlauch abgezogen werden. Zu diesem Zweck muß der Wellschlauch bzw. das Leitungspaket an einem seiner Enden demontiert werden.

Es ist daher Aufgabe der Erfindung, eine Vorrichtung der eingangs genannten Art derart weiterzubilden, dass sie leichter zu handhaben ist.

Die Aufgabe wird erfindungsgemäß durch eine Vorrichtung mit den Merkmalen des Anspruchs 1 gelöst. Vorteilhafte Weiterbildungen sind Gegenstand der abhängigen Ansprüche.

Der Erfindung liegt der Gedanke zugrunde, dass eine teilbare Führungshülse wesentlich einfacher vom Leitungspaket bzw. vom das Leitungspaket aufnehmenden Wellschlauch entfernbar ist. Die beiden Hülsenteile werden einfach voneinander getrennt und vom Leitungspaket abgenommen. Dieses muß dabei nicht demontiert werden.

Zweckmäßig liegen die Hülsenteile entlang zweier längsverlaufender Trennlinien auf Stoß aneinander. Dabei kann mittels einer Nut- und Federverbindung eine Befestigung der Hülsenteile aneinander sowie die Positionierung der Hülsenteile zueinander erleichtert werden. Es wird jedoch bevorzugt, dass die Hülsenteile jeweils mindestens einen Rasthaken sowie mindestens eine Rastvertiefung zum Einrasten des mindestens einen Rasthakens des jeweils anderen Hülsenteils aufweisen. Dies ermöglicht eine einfach lösbare Befestigung der Hülsenteile aneinander. Dabei sind die Hülsenteile zweckmäßig baugleich ausgeführt, so dass die Herstellung vereinfacht wird.

Zum Fixieren im Befestigungselement weist die Führungshülse zweckmäßig einen außenseitig umlaufenden Wulst auf. Dieser ist in einer Vertiefung an einer Innenseite des Befestigungselements aufgenommen. Wird das Befestigungselement geschlossen, so ist die Führungshülse unverschiebbar in ihm aufgenommen.

Gemäß einer vorteilhaften oder alternativen Ausführungsform weist das Befestigungselement zwei Schalen auf, die mittels eines Scharniers miteinander verbunden sind, und das Scharnier weist einen sich in Längsrichtung erstreckenden Bolzen an der ersten der Schalen sowie mindestens einen den Bolzen lösbar aufnehmenden und teilweise umgreifenden Haken an der zweiten der Schalen auf. Damit ist eine lösbare Verbindung der Schalen aneinander verwirklicht, die gleichzeitig als Scharnier zum Aufklappen wirkt. Indem der mindestens eine Haken den Bolzen nur teilweise umgreift, kann der Bolzen aus der Befestigung entnommen werden.

Es wird bevorzugt, dass die zweite Schale mindestens zwei Haken aufweist, wobei der Bolzen mit einer ersten Seite an einem ersten Haken und mit einer der ersten Seite abgewandten zweiten Seite an einem zweiten Haken anliegt. So wird der Bolzen von zwei Seiten festgehalten. Er kann in die Haken eingerastet werden. Es wird jedoch bevorzugt, dass der Bolzen die Form eines auf mindestens einer Seite entlang seiner Längserstreckung abgeflachten Zylinders aufweist. So wird ein Einfügen zwischen die Haken bzw. ein Entnehmen des Bolzens in einer vorbestimmten Position erleichtert, während ein Verdrehen des Bolzens aus dieser Position heraus eine zuverlässige Befestigung ergibt.

Die beiden Schalen liegen zweckmäßig entlang zweier Anlageflächen auf Stoß aneinander. Sie weisen vorteilhaft Rastmittel zum gegenseitigen Befestigen an der dem Scharnier gegenüberliegenden Seite auf. Zweckmäßig weisen die Befestigungsmittel Öffnungen in einer der beiden Schalen zum Durchführen von Schrauben auf. Die Schrauben sind leicht zugänglich, indem die Schalen aufgeklappt werden und die Führungshülse entnommen wird.

Im Folgenden wird die Erfindung anhand eines in der Zeichnung schematisch dargestellten Ausführungsbeispiels näher erläutert. Es zeigen
- Fig. 1: eine Vorrichtung zum Führen eines Leitungspakets in aufgeklappter Stellung, an einer Platte befestigt;
- Fig. 2: die Vorrichtung gemäß Fig. 1 aus einer anderen Perspektive ohne die Platte;
- Fig. 3: die Führungshülse der Vorrichtung gemäß Fig. 1 und Fig. 2 und
- Fig. 4a, 4b: Details des Befestigungselements gemäß Fig. 1 und Fig. 2 in Längsrichtung betrachtet, teilweise im Schnitt (Fig. 4b).

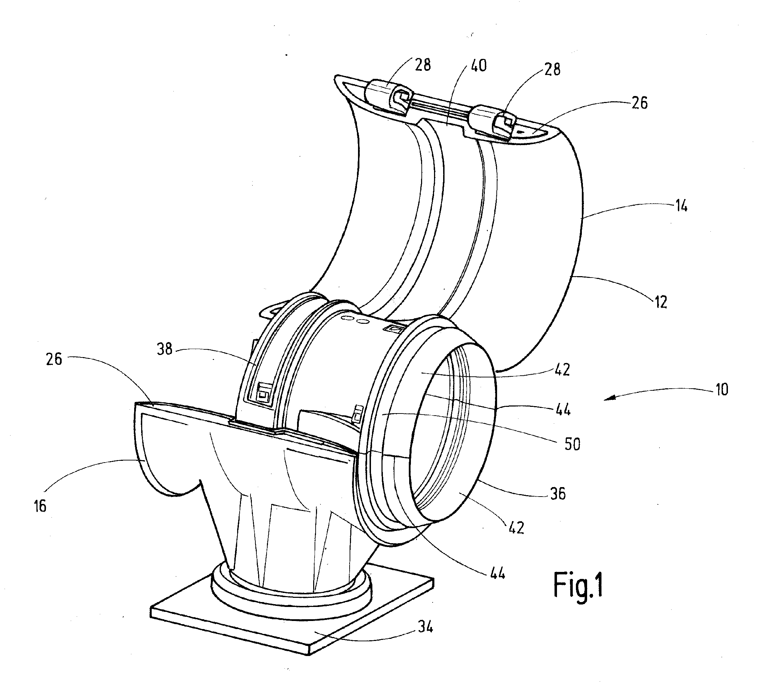

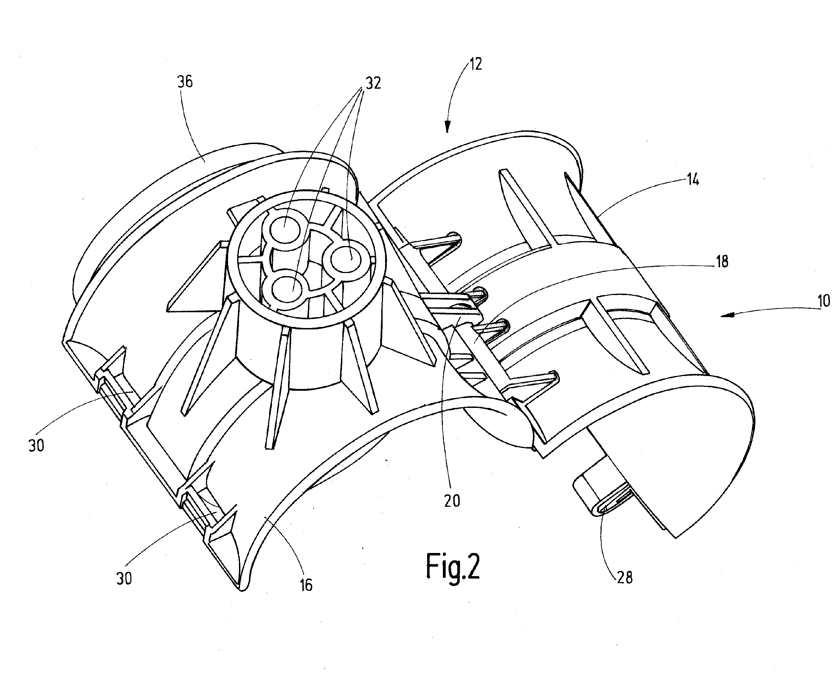

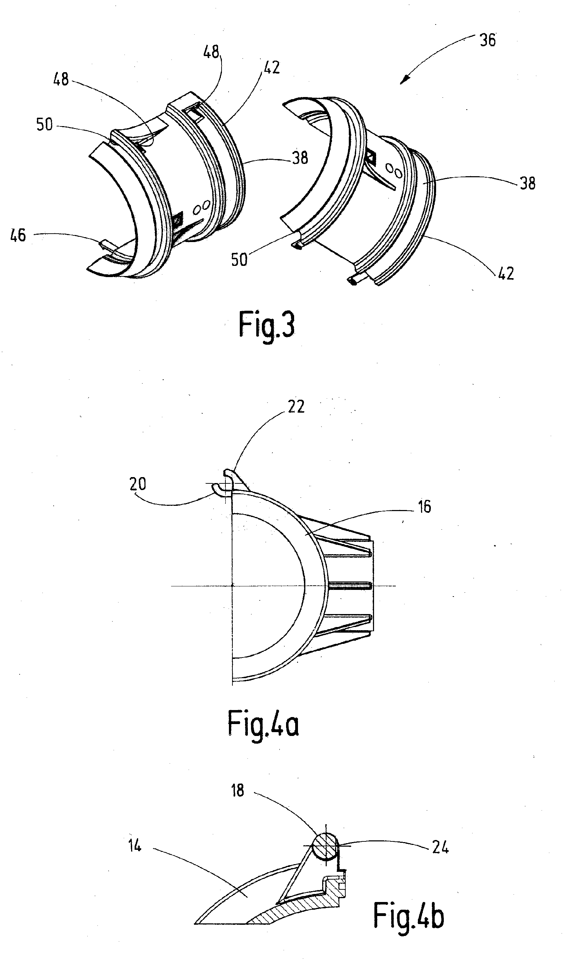

Eine Vorrichtung 10 zum Führen eines Leitungspakets gemäß Fig. 1, 2 weist ein Befestigungselement in Form einer Trompetenhalterung 12 auf. Diese weist zwei Schalen 14, 16 auf, die mittels eines Scharniers miteinander verbunden und gegeneinander verschwenkbar sind. Dabei ist in Fig. 1, 2 das Befestigungselement 12 in geöffneter Stellung gezeigt. Wird es geschlossen, so weist es die Form eines kurzen Rohres auf mit sich zu den Enden hin vergrößerndem Innendurchmesser. Das Scharnier besteht aus einem sich in Längsrichtung der Trompetenhalterung 12 erstreckenden Bolzen 18 an der ersten Schale 14 und drei Haken 20, die im Abstand zueinander an der zweiten Schale 16 angeordnet sind und zwischen denen der Bolzen 18 aufgenommen ist. Dabei sind die beiden äußeren Haken 20 so positioniert, dass sie an einer ersten Seite des Bolzens 18 anliegen, während der mittlere Haken 22 (Fig. 4a) so angeordnet ist, dass er an einer der ersten Seite des Bolzens 18 gegenüberliegenden zweiten Seite anliegt. Der Bolzen 18 ist, wie in Fig. 4b gezeigt, im wesentlichen zylinderförmig. An einer Seite weist er jedoch eine sich über seine gesamte Länge erstreckende Abflachung 24 auf, die ein Einfügen des Bolzens 18 zwischen die Haken 20, 22 erleichtert.

In geschlossenem Zustand liegen die Schalen 14,16 mit in Längsrichtung der Trompetenhalterung 12 verlaufenden Anlageflächen 26 auf Stoß aneinander an. An der ersten Schale 14 sind Rasthaken 28 angeformt, die zum festen Verbinden der beiden Schalen 14, 16 in Durchbrüche 30 in der zweiten Schale 16 eingerastet werden können. Zudem weist die zweite Schale durchgehende Öffnungen 32 auf, durch die von der Innenseite her Schrauben zum Befestigen an einem Maschinenteil durchgeführt werden können, welches in Fig. 1 durch die Platte 34 angedeutet ist.

In der Trompetenhalterung 12 ist eine Führungshülse 36 aufgenommen, die an ihrer Außenseite einen rings umlaufenden Wulst 38 aufweist, der zum Fixieren der Führungshülse 36 in der Trompetenhalterung 12 in eine komplementäre Vertiefung 40 in den Schalen 14, 16 eingesetzt wird. Die Führungshülse 36, die dazu bestimmt ist, ein Leitungspaket oder einen ein Leitungspaket aufnehmenden Wellschlauch aufzunehmen und in dessen Längsrichtung, die dann der Längsrichtung der Trompetenhalterung 12 und der Führungshülse 36 entspricht, verschieblich zu führen, ist aus zwei baugleichen Hülsenteilen 42 (Fig. 3) zusammengesetzt. Diese liegen entlang zweier längsverlaufender Trennlinien 44 auf Stoß aneinander an und weisen jeweils zwei Rasthaken 46 sowie zwei Rastvertiefungen 48 zur Aufnahme der Rasthaken 46 auf. Am einen Ende weist die Führungshülse 36 eine Kontur 50 zum Aufstecken einer ebenfalls den Wellschlauch aufnehmenden Schraubenfeder auf.

Zusammenfassend ist folgendes festzuhalten:
Die Erfindung betrifft eine Vorrichtung 10 zum Führen eines Leitungspakets an einer Maschine, insbesondere zur Montage an einem Roboter, mit einem rohrförmigen Befestigungselement 12, das Befestigungsmittel 32 zum Befestigen an einem Maschinenteil 34 aufweist, und mit einer im Befestigungselement 12 lösbar fixierten Führungshülse 36, in der das Leitungspaket in Längsrichtung verschiebbar und voll umfänglich umschlossen aufnehmbar ist. Erfindungsgemäß ist vorgesehen, dass die Führungshülse 36 mindestens zwei voneinander trennbare Hülsenteile 42 zum jeweils teilweisen Umschließen des Leitungspakets aufweist.

## Patentansprüche

1. Vorrichtung zum Führen eines Leitungspakets an einer Maschine, insbesondere zur Montage an einem Roboter, mit einem rohrförmigen Befestigungselement (12), das Befestigungsmittel (32) zum Befestigen an einem Maschinenteil (34) aufweist, und mit einer im Befestigungselement (12) lösbar fixierten Führungshülse (36), in der das Leitungspaket in Längsrichtung verschiebbar und voll umfänglich umschlossen aufnehmbar ist, **dadurch gekennzeichnet, dass** die Führungshülse (36) mindestens zwei voneinander trennbare Hülsenteile (42) zum jeweils teilweisen Umschließen des Leitungspakets aufweist.

2. Vorrichtung nach Anspruch 1, **dadurch gekennzeichnet, dass** die Hülsenteile (42) entlang zweier längsverlaufender Trennlinien (44) auf Stoss aneinander liegen.

3. Vorrichtung nach Anspruch 2, **dadurch gekennzeichnet, dass** die Hülsenteile (42) eine Nut- und Federverbindung aufweisen.

4. Vorrichtung nach einem der vorangehenden Ansprüche, **dadurch gekennzeichnet, dass** die Hülsenteile (42) jeweils mindestens einen Rasthaken (46) sowie mindestens eine Rastvertiefung (48) zum Einrasten des mindestens einen Rasthakens (46) des jeweils anderen Hülsenteils (42) aufweisen.

5. Vorrichtung nach einem der vorangehenden Ansprüche, **dadurch gekennzeichnet, dass** die Hülsenteile (42) baugleich sind.

6. Vorrichtung nach einem der vorangehenden Ansprüche, **dadurch gekennzeichnet, dass** die Führungshülse (36) einen außenseitig umlaufenden Wulst (38) aufweist, und dass das Befestigungselement (12) an einer Innenseite eine Vertiefung (40) zur Aufnahme des Wulstes (38) aufweist.

7. Vorrichtung nach einem der vorangehenden Ansprüche, **dadurch gekennzeichnet, dass** das Befestigungselement (12) zwei Schalen (14, 16) aufweist, die mittels eines Scharniers miteinander verbunden sind, und dass das Scharnier einen sich in Längsrichtung erstreckenden Bolzen (18) an der ersten der Schalen (14), sowie mindestens einen den Bolzen (18) lösbar aufnehmenden und teilweise umgreifenden Haken (20, 22) an der zweiten der Schalen (16) aufweist.

8. Vorrichtung zum Führen eines Leitungspakets an einer Maschine, insbesondere zur Montage an einem Roboter, mit einem rohrförmigen Befestigungselement (12), das zwei mittels eines Scharniers miteinander verbundene Schalen (14, 16) sowie Befestigungsmittel (32) zum Befestigen an einem Maschinenteil (34) aufweist, und mit einer im Befestigungselement (12) lösbar fixierten Führungshülse (36), in der das Leitungspaket in Längsrichtung verschiebbar und voll umfänglich umschlossen aufnehmbar ist, **dadurch gekennzeichnet, dass** das Scharnier einen sich in Längsrichtung erstreckenden Bolzen (18) an der ersten der Schalen (14) sowie mindestens einen den Bolzen (18) lösbar aufnehmenden und teilweise umgreifenden Haken (20, 22) an der zweiten der Schalen (16) aufweist.

9. Vorrichtung nach Anspruch 7 oder 8, **dadurch gekennzeichnet, dass** die zweite Schale (16) mindestens zwei Haken (20, 22) aufweist, wobei der Bolzen (18) mit einer ersten Seite an einem ersten Haken (20) und mit einer der ersten Seite abgewandten zweiten Seite an einem zweiten Haken (22) anliegt.

10. Vorrichtung nach einem der Ansprüche 7 bis 9, **dadurch gekennzeichnet, dass** der Bolzen (18) die Form eines auf mindestens einer Seite entlang seiner Längserstreckung abgeflachten Zylinders aufweist.

11. Vorrichtung nach einem der Ansprüche 7 bis 10, **dadurch gekennzeichnet, dass** die beiden Schalen (14, 16) entlang zweier Anlageflächen (26) auf Stoss aneinander liegen.

12. Vorrichtung nach einem der Ansprüche 7 bis 11, **dadurch gekennzeichnet, dass** die Schalen (14, 16) Rastmittel (28, 30) zum gegenseitigen Befestigen an der dem Scharnier gegenüberliegenden Seite aufweisen.

13. Vorrichtung nach einem der vorangehenden Ansprüche, **dadurch gekennzeichnet, dass** die Befestigungsmittel (32) Öffnungen in einer Wand des Befestigungselements (12) zum Durchführen von Schrauben aufweisen.
